# EUROPEAN PATENT SPECIFICATION

(11) **EP 1 716 747 B1**
(45) Date of publication and mention of the grant of the patent: **11.06.2008**
(21) Application number: 06113319.5
(22) Date of filing: 28.04.2006
(51) Int. Cl.: A01G 13/02

(54) **A device for protection against hailstones.**
Hagelschutzvorrichtung
Dispositif de protection contre la grêle

(30) Priority: 29.04.2005 FR 0504397
(43) Date of publication of application: 02.11.2006
(73) Proprietor: Helios S.r.l., 24050 Lurano, BG (IT)
(72) Inventor: Munoz, Andres, I-24047, Treviglio (BG) (IT)
(74) Representative: Giavarini, Francesco

(56) References cited:
- EP-A- 1 442 656
- FR-A- 2 827 473
- FR-A- 2 852 784

## Description

The present invention relates to a device for protection against hailstones and similar atmospheric agents. In particular, the present invention relates to a device for agricultural, horticulture, orchard, and, in general, crop protection against hailstones. The device according to the invention is also useful for the protection of delicate crops, such as kiwi and similar fragile orchards, against strong and potentially harmful winds.

The use of suitable nets for agricultural or horticulture protection is well known in the art. The known protection systems usually comprise an array of adjacent nets positioned in rows, each row covering and protecting a corresponding row of plants. In each row, a net is positioned on and anchored to a ridge cable, in a position substantially symmetrical thereto. A supporting structure, usually comprising a number of supporting poles anchored to the ground, is normally used to support the ridge cables and the nets. Also, tensioning means are usually provided, said tensioning means connecting at least the lateral edge of a net with the corresponding lateral edge of the adjacent net and with the central ridge. In this way the nets form a plane, that can be horizontal or inclined with respect to the central ridge, thereby protecting the underlying plants, see e.g. EP-A-1 442 656.

The known systems have however a number of drawbacks. In particular, they require the use of complicated, and sometimes expensive, tensioning systems that include long elastic cables connecting the nets with the central ridges. The maintenance of these systems is also somehow expensive and complicated.

Another drawback of the protection system of the known type is given by the fact that the nets, due to the mounting and tensioning systems, do not allow an optimum discharge of the accumulated hailstones. In practice, under the load of hailstones, the plane of the nets loses its proper shape and gets deformed, thereby forming concave bags in which the hailstones tend to accumulate. As a consequence, the nets can be damaged by the excessive loads of the hailstones that cannot be discharged, or is discharged very slowly.

The loads and the tensions are also transmitted to the supporting structure, poles and ridge cables, that can suffer or can be damaged.

Based on this consideration, the main task of the subject-matter of the present invention is that of supplying a protection device against hailstones and similar atmospheric agents which can overcome the above mentioned problems and drawbacks.

In this frame, the main aim of the present invention is that of supplying a protection device against hailstones and similar atmospheric agents which allows a quick discharge of the hailstones.

Another aim of the present invention is that of supplying a protection device against hailstones and similar atmospheric agents which does not require the use of complicated and expensive tensioning systems during the lifetime of the structure.

A further aim of the present invention is that of supplying a protection device against hailstones and similar atmospheric agents which can be easily installed.

A further aim of the present invention is that of supplying a protection device against hailstones and similar atmospheric agents which can protect delicate crops against strong and potentially harmful winds.

A further aim of the present invention is that of supplying a protection device against hailstones and similar atmospheric agents in which the supporting structure is not subjected to excessive loads.

Another but not least aim of the present invention is that of supplying a protection device against hailstones and similar atmospheric agents that is both extremely reliable, relatively easy to be produced and at a competitive price.

The above aims are achieved through a device for protection against hailstones and similar atmospheric agents according to claim 1 comprising: a supporting structure, at least a first and a second contiguous nets and tensioning means for said nets. The device according to claim 1 is characterised in that said nets have a reinforced central strip for coupling with said supporting structure, first and second lateral woven edges, first and second intermediate anchoring means positioned between said reinforced central strip and said first and second lateral woven edges; the device according to claim 1 is further characterised in that said tensioning means comprise supporting and tensioning elastic means which connect the first intermediate anchoring means of the first net with the second intermediate anchoring means of the second net.

Preferably, the device according to the invention is characterised in that said supporting and tensioning elastic means comprise an elastic cable.

Advantageously, said supporting structure comprises supporting poles and a ridge cable.

In a preferred embodiment, the device according to the invention is characterised in that said first intermediate anchoring means comprise a first intermediate reinforced strip and said second intermediate anchoring means comprise a second intermediate reinforced strip.

Preferably, said reinforced central strip and said first and second intermediate reinforced strips define an area of the nets in which said nets are tensioned and substantially planar, said first and second intermediate reinforced strips together with, respectively, said first and second lateral woven edges defining a first and a second skirt portion of said nets.

In a preferred embodiment, the device according to the invention is characterised in that said elastic cable is positioned above said skirt portions.

Preferably the skirt portions of two adjacent nets define a substantially V-shaped bag, the lower edge of said V-shaped bag being formed by said first and second lateral woven edges joined together at intervals by closing means. In such a case, the first and second lateral woven edges of two adjacent nets can be joined together at intervals by closing means fixed at an intermediate point of said elastic cable.

In an alternative preferred embodiment, the device according to the invention is characterised in that said elastic cable is positioned below said skirt portions the first and second lateral woven edges of two adjacent nets being joined together at intervals by closing means. In such a case, said closing means can be fixed at an intermediate point of said elastic cable.

Thanks to its structure, one of the main advantages of the protection device of the invention is its capability to easily discharge the accumulated hailstones, thereby avoiding excessive loads on the nets and supporting structure. Also, the use of supporting and tensioning elastic means which connect the first intermediate anchoring means of the first net with the second intermediate anchoring means of the second net greatly simplify the installation of the protection device.

In practice, the device comprises a first and a second woven net, preferably a fabric of English turn knitting type, whose mechanical features allows withstanding the impact of hailstones and discharging thereof with a good safety margin. The nets have a reinforced central strip for coupling with a supporting structure, first and second lateral woven edges, as well as first and second intermediate anchoring means positioned between said reinforced central strip and said first and second lateral woven edges. The first and second intermediate anchoring means preferably comprise, respectively, a first and a second intermediate reinforced strip woven on the net.

In contrast to the conventional systems, the device of the present invention does not require the tensioning means be fixed to the ridge cables. In fact, the tensioning system of the device of the present invention comprises supporting and tensioning elastic means, for instance elastic cables, which connect the first intermediate anchoring means of a first net with the second intermediate anchoring means of a second net. This allows using elastic cables much shorter and less expensive than the relatively long elastic cables used in conventional systems. Also, and even more important, the absence of tensioning means directly fixed to the ridge cables greatly reduces the loads and the stresses on the supporting structure.

As better explained hereinafter, this system, with tensioning means based on short elastic cables connected only to the nets at intermediate anchoring points, allows the nets be deformed under the load of the hailstones according to a convex profile, thereby making much easier and quicker the discharge of the hailstones. Consequently, the risk of damages to the nets and the supporting structure is greatly reduced. This does not happen with the conventional systems based on long elastic cables connecting the nets to the ridge cables, in which systems the nets are deformed under the load of the hailstones according to a concave profile so as to form bags in which the hailstones accumulate, thereby subjecting the nets and the supporting structure to heavy loads and stresses.

Other characteristics and advantages of the invention will result from the description of preferred embodiments of the device for protection against hailstones and similar atmospheric agents according to the invention, illustrated by way of non-limiting examples in the accompanying drawings, in which:
- Figure 1 is a perspective view of a first embodiment of the protection device according to the invention;
- Figure 2 is a perspective view of a second embodiment of the protection device according to the invention;
- Figure 3C is a front view of the protection device of figure 1, showing its functioning principle;
- Figure 3D is a front view of the protection device of the prior art, showing its functioning principle;
- Figure 4 is a front view of a detail of the protection device of figure 1;
- Figure 5 is a front view of a detail of the protection device of figure 2;
- Figure 6 is a front view of a detail of the protection device of the invention, showing two alternative embodiments of the junction between the lateral woven edges of two adjacent nets;
- Figure 7 is a top view of the junction between the lateral woven edges of two adjacent nets of figure 6;
- Figure 8 is a side view of the junction between the lateral woven edges of two adjacent nets of figure 6;
- Figure 9 is a top view of an embodiment of the connection between an intermediate reinforced strip and an elastic cable;
- Figure 10 is a side view of the embodiment of figure 9;
- Figure 11 is a top view of a first embodiment of coupling of skirt portions (semi-joint crossing lateral edges);
- Figure 12 is a top view of a second embodiment of coupling of skirt portions (simple crossing lateral edges);
- Figure 13 is a top view of a third embodiment of coupling of skirt portions (flat free lateral edges);
- Figure 14 is a top view of a fourth embodiment of coupling of skirt portions (overlapping lateral edges);
- Figure 15 is a top view of a fifth embodiment of coupling of skirt portions (V-shaped bag).

With reference to the said figures, in a typical installation of the device of the present invention, each row of plants is covered by a corresponding net (A, B) that is fixed to a ridge cable (6) through a central reinforced woven strip (23A, 23B) and fixing plates or similar devices. The net is typically larger than the distance between two adjacent rows of plants. The longitudinal edges of the net, i.e. the edges lying parallel to the row of plants, comprises a lateral woven edge (selvedge 23, 23', 23 ") on which a closing plate (2) can be mounted; said closing plate (2) can be used to connect the lateral woven edges (23, 23', 23 ") of two adjacent nets. One of the characterising features of the device of the present invention is that the net has a first and a second intermediate anchoring means positioned substantially symmetrical with respect to the central reinforced woven strip (23A, 23B). Said first and a second anchoring means can respectively comprise a first and second intermediate reinforced strips (18A, 18B) positioned substantially symmetrical with respect to the central reinforced woven strip (23A, 23B). Also, the device of the present invention is provided with tensioning means which comprise supporting and tensioning elastic means (4) connecting the first intermediate anchoring means of the first net (A) with the second intermediate anchoring means of the second net (B), e.g. connecting the first intermediate reinforced strip (18A) with the second intermediate reinforced strip (18B).

Preferably, the supporting and tensioning elastic means comprise relatively short elastic cable (4) that are connected at intervals to the intermediate reinforced strips of two adjoining nets (A, B) through connecting means, such as hooks and corresponding connection plates. In this way, the area of the nets (A, B) between the reinforced central strip (23A, 23B) and said first and second intermediate reinforced strips (18A, 18B) is kept stretched and substantially planar. At the same time, the portions of the nets between said first and second intermediate reinforced strips (18A, 18B) and, respectively, said first and second lateral woven edges (23, 23', 23") define a first and a second skirt portion (1A, 1B) of said nets (A, B). According to an embodiment of the present invention, the skirt portion (1A, 1B) can be connected together so as to form a V-shaped bag having openings at its bottom edge. Under the load of the hailstones, the elastic cables are stretched up to two or three times their length in normal conditions, thereby determining an inclination of the nets up to an angle that allows discharging the hailstones through the openings of the bottom edge of the V-shaped bag.

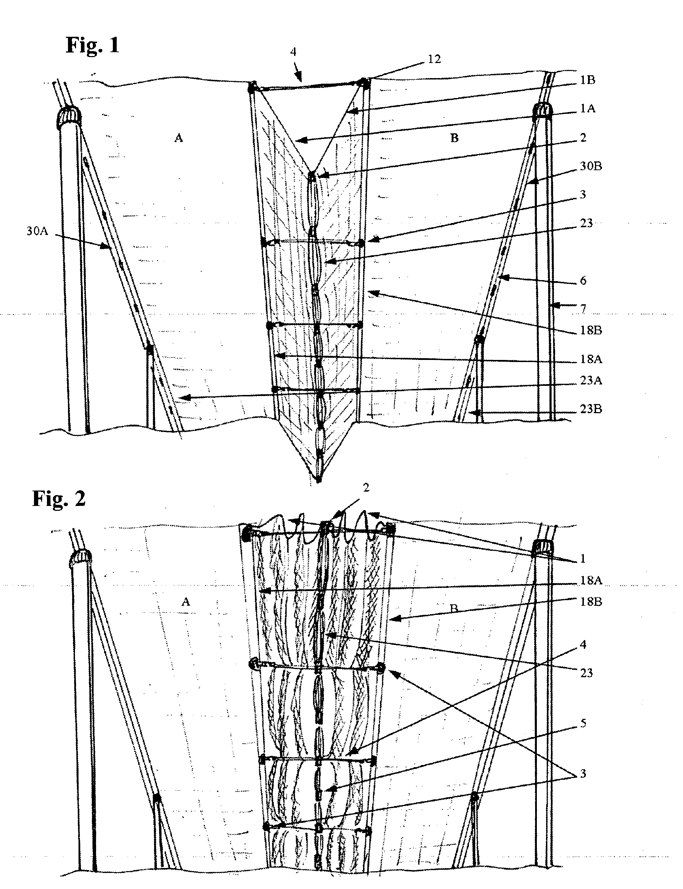

In more details, with reference to figure 1, the nets (A, B) are mounted on a supporting structure comprising poles (7) and ridge cables (6). For sake of simplicity, only one half of each net is shown in the figure. The nets (A, B) are fixed to the ridge cable (6) through the central reinforced woven strip (23A, 23B). Relatively short elastic cables (4), each having one end connected the first intermediate reinforced strip (18A) of the first net (A) and the other end connected to the second intermediate reinforced strip (18B) of the second net (B), keeps the areas of the nets (A, B) between the reinforced central strip (23A, 23B) and said first and second intermediate reinforced strips (18A, 18B), respectively, stretched and substantially planar. The elastic cables (4) are positioned at intervals along the longitudinal development of the nets and transmit a substantially symmetrical tension to the nets (A, B). The elastic cables are positioned above the skirt portions (1A, 1B) that hang from the corresponding intermediate reinforced strips (18A, 18B). The skirt portions (1A, 1B) are connected together by using plates (2) positioned at intervals along the reinforced lateral woven edges (23), thereby forming a V-shaped bag with openings in between the plates (2). In this way, the area under the nets is totally protected from hailstones, and, at the same time the hailstones can be easily discharged form the nets through the openings of the V-shaped bags.

Alternatively, according to figure 2, the elastic cables (4) are positioned below the skirt portions (1A, 1B) which rest on the elastic cables themselves. The skirt portions (1A, 1B) are connected together at intervals by using plates (2) as in the previous case; advantageously the plates (2) are mounted, preferably in a sliding manner, on the cable (4) thereby maintaining the skirt portions (1A, 1B) folded and substantially centred between the intermediate reinforced strips (18A, 18B) under normal conditions. This embodiment is particularly advantageous when the nets have to be mounted at a relatively low height with respect to the ground or when the space between the rows of plants has to be kept free for the passage of operators or working machines.

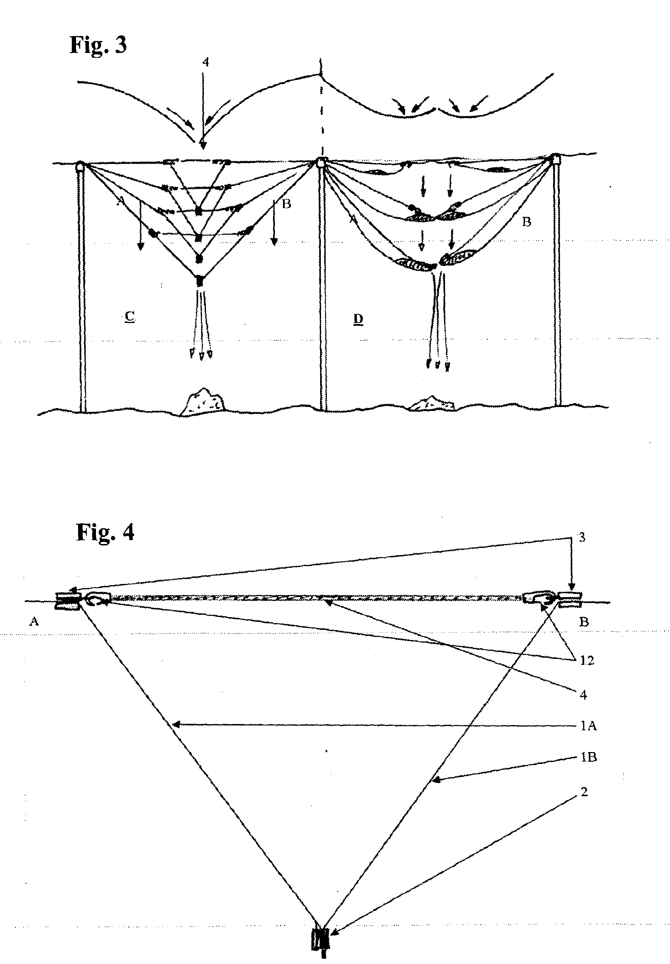

Figure 3C, bottom part, shows the functioning of the device according to the present invention. Under the load of the hailstones, the elastic cables (4) are progressively stretched, thereby determining a progressive downward inclination of the nets (A, B). The hailstones can therefore be easily discharged through the openings at the bottom edge of the V-shaped bag, since, as schematically illustrated in the upper part of figure 3, the nets keep a convex profile that avoids hailstone accumulation. In contrast, as illustrated in figure 3D, bottom part, in a conventional mounting having relatively long elastic cables fixed to the central ridge, the load of the hailstones brings about a progressive lowering of the central parts of the nets according to a concave profile (see figure 3D, upper part). There is therefore an accumulation of hailstones in the concavity of the nets, with consequent increase of potentially dangerous loads and tensions on the nets and supporting structure.

Figure 4 shows in details the mounting of the elastic cables (4) according to the embodiment of figure 1. The nets (A, B) are stretched and kept substantially planar by the elastic cables (4) which are fixed at intervals to anchoring points provided for on the nets (A, B). In this case, the anchoring points comprise plates (3) onto which the cables (4) are fixed by means of hooking means (12). The skirt portions (1A, 1B) hang below the cable and their free ends are joined together at intervals by the plates (2) so as to form a V-shaped bag.

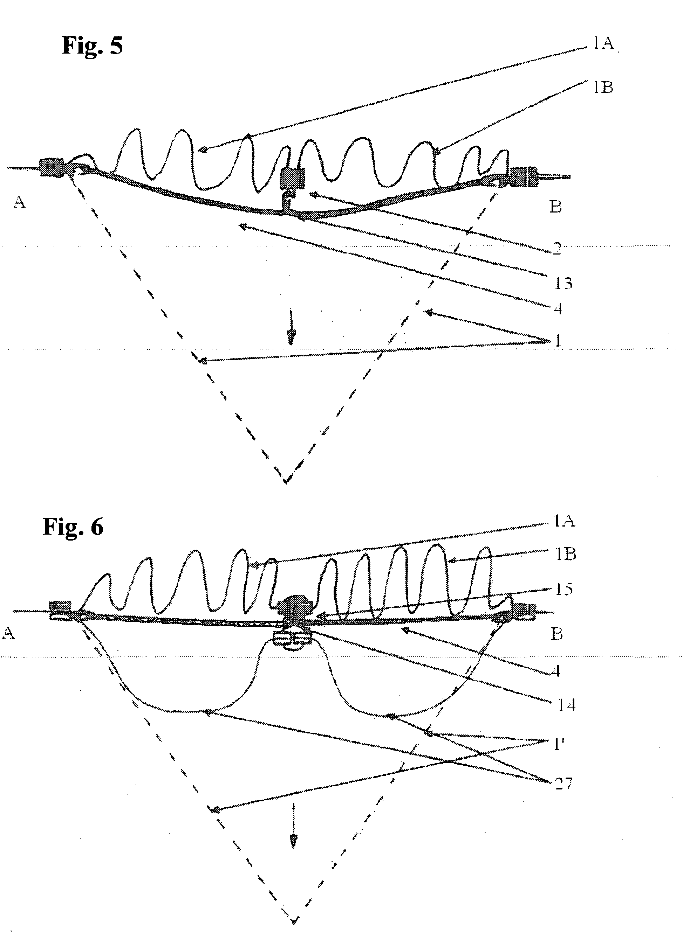

Alternatively, as shown in figure 5, the elastic cables (4) are positioned below the skirt portions (1A, 1B) which rest on the elastic cables themselves. The free ends of the skirt portions (1A, 1B) are connected together at intervals by using plates (2) having a hook (13) slidingly mounted on the cable (4); the skirt portions (1A, 1B) are therefore kept folded and substantially centred between the intermediate reinforced strips (18A, 18B) under normal conditions. Under the load of the hailstones, the elastic cables (4) are progressively stretched, thereby determining a progressive lowering of the nets (A, B) and of the skirt portions (1A, 1B), until these latter reach the dotted configuration (1) corresponding to a V-shaped bag.

According to a further embodiment, illustrated in figure (6), lower part, the first and second lateral woven edges (23) of two adjacent nets (A, B) are joined together at intervals by closing means (14,15) fixed at an intermediate point of said elastic cable (4). Under normal conditions, the skirt portions form therefore two bags (27) with little or no encumbrance of the space underneath. Under the load of the hailstones, the elastic cables (4) are progressively stretched, thereby determining a progressive lowering of the nets (A, B) and of the central connection point of the bags (27), until the skirt portions reach the dotted configuration (1') corresponding to a V-shaped bag. In a similar way, as illustrated in the upper part of figure 6, the elastic cable (4) is mounted below the skirt portion (1A, 1B) which are joined together at intervals by closing means (14, 15) fixed at an intermediate point of said elastic cable (4). In this case the functioning is similar to the embodiment of Figure 5.

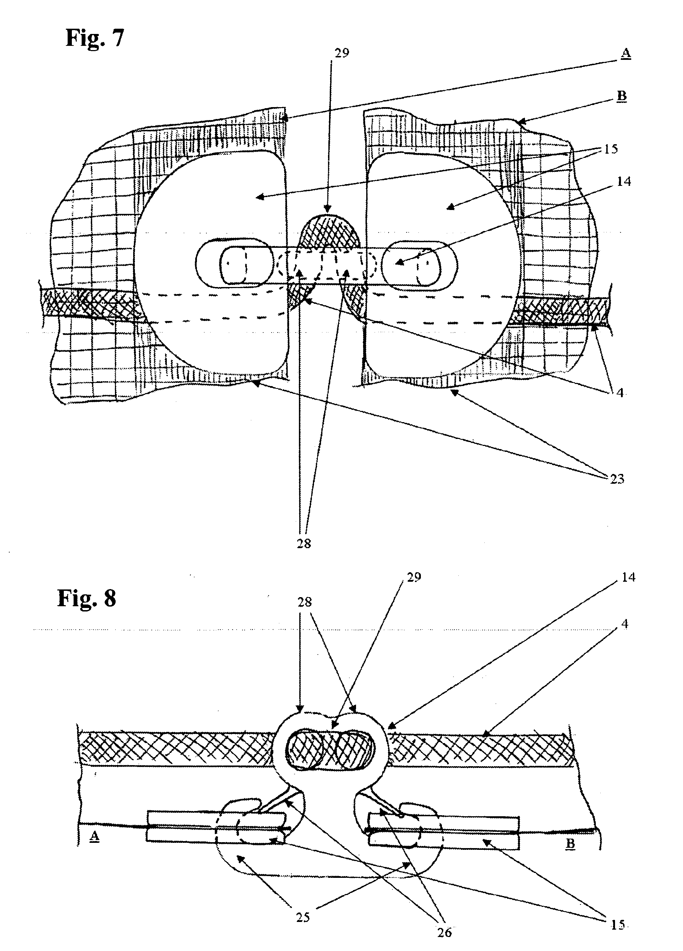

Figure 7 and 8 show in details a possible embodiment of the closing means (14, 15), that can be used for instance in the embodiments of figure 6. According to this embodiment, two plates (15) are fixed onto the lateral woven edges (23) of two adjacent nets (A, B). The two plates are connected by the connection means (14) having hooks (25) which engage in corresponding holes of the plates (15). Advantageously safety tongues (26) can be used to prevent disengagement of the hooks (25) from the holes. The cable (4) is inserted in two holes (28) provided for in the body of the connection means (14) so as to form a tortuous path (29) which blocks the connection means in a predetermined position of the cable (4).

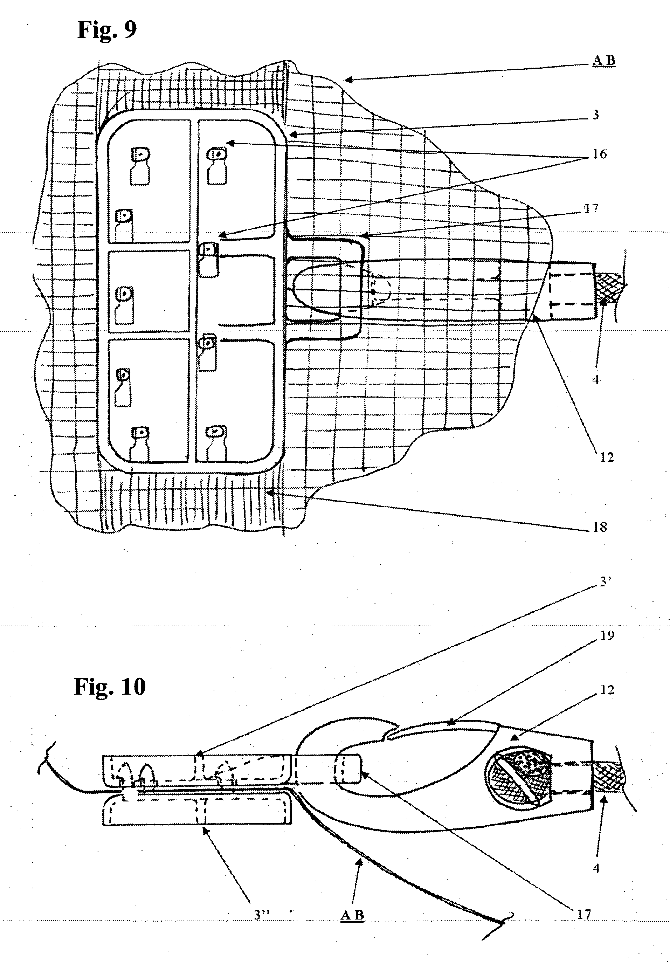

Figure 9 and 10 show in details a possible embodiment of the connection means used to connect the elastic cables (4) to the intermediate anchoring points of the nets (A, B). The connection means comprises a connection plate (3) having a male half shell (3") and a female half shell (3') positioned on the opposite sides of a net (A, B), in correspondence of the intermediate reinforced strip (18). Clips (16) are positioned on the male half shell (3"), said clips (16) engaging corresponding holes in the female half shell (3'). The plate (3) is provided with a bridge (17) into which a hook (12), fixed to the cable (4), engages. Advantageously a safety tongues (19) can be used to prevent disengagement of the hooks (12) from the bridge (17).

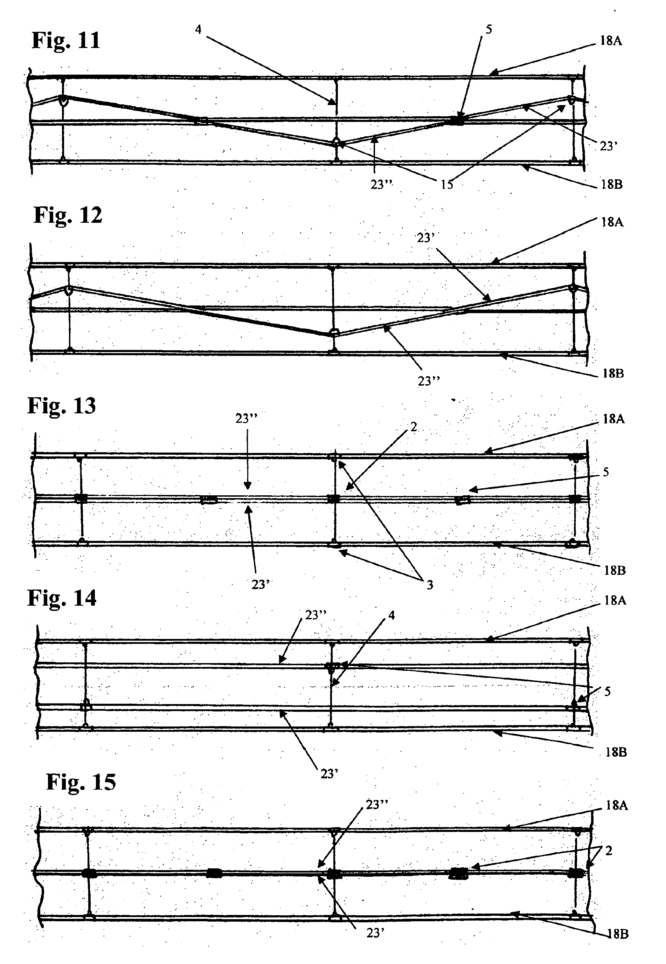

Figures 11-15 illustrate some possible embodiments of the coupling of skirt portions in a device according to the invention.

In figure 11, the lateral woven edges 23' and 23" of the skirt portions are crossed and fixed to the elastic cables (4) in alternate positions with respect to a central axis of symmetry. The lateral woven edges 23' and 23" are fixed to the cables by means of plates (15) and are also fixed each other at intermediate points between the cables (4) by means of the plates (5). The cables (4) are mounted below the nets.

The embodiment of figure 12 is similar to the one of figure 11, the difference being that the lateral woven edges 23' and 23" are not fixed to each other at intermediate points between the cables (4).

In the embodiment of figure 13, the lateral woven edges 23' and 23" of the skirt portions are fixed to the elastic cables (4) in a substantially central position. The lateral woven edges 23' and 23" are fixed to the cables by means of plates (2) and are also fixed each other at intermediate points between the cables (4) by means of the plates (5). The cables (4) are mounted below the nets. This mounting substantially corresponds to the embodiment of figure 2.

In the embodiment of figure 14, the skirt portions are overlapped, one of them having the cable (4) above it, the other one having the cable (4) below it.

In the embodiment of figure 15, the lateral woven edges 23' and 23" of the skirt portions hang below the elastic cables (4) and form a V-shaped bag. This mounting substantially corresponds to the embodiment of figure 1.

From the above it can be seen that the device of the present invention fully achieves the intended aims. In particular, thanks to the particular mounting based on short elastic cables fixed at intermediate anchoring points of the nets, it is possible to easily and rapidly discharge hailstones, with little or no accumulation thereof. Consequently, the loads and stresses on the nets and the supporting structure are greatly reduced.

Also, the use of tensioning means, essentially based on short elastic cables greatly simplifies the maintenance of the device and reduces the related costs.

Although particularly suited to protect orchards and similar from the hailstones, the device of the present invention is also useful as a wind shield for particularly delicate crops, as well as a protection device for items potentially damageable by hailstones, such as cars in outdoor parkings.

The protection device of the invention is susceptible to numerous modifications and variants, all within the scope of the invention concept; furthermore, all details can be replaced by other technically equal elements. Basically, the materials as well as the dimensions can be any depending on the technical requirements and the art.

## Claims

1. A device for protection against hailstones and similar atmospheric agents comprising:
a supporting structure, a first and a second contiguous nets (A, B), tensioning means for said nets (A, B), **characterised in that**:
said nets (A, B) have a reinforced central strip (23A, 23B) for coupling with said supporting structure, first and second lateral woven edges (23, 23', 23"), first and second intermediate anchoring means positioned between said reinforced central strip (23A, 23B) and said first and second lateral woven edges (23, 23', 23 "), and further
**characterised in that:**
said tensioning means comprise supporting and tensioning elastic means (4) which connect the first intermediate anchoring means of the first net (A) with the second intermediate anchoring means of the second net (B).

2. The device according to claim 1, **characterised in that** said supporting and tensioning elastic means (4) comprise an elastic cable.

3. The device according to claim 1 or 2, **characterised in that** said supporting structure comprises supporting poles (7) and a ridge cable (6).

4. The device according to one or more of the preceding claims, **characterised in tha**t said first intermediate anchoring means comprise a first intermediate reinforced strip (18A) and said second intermediate anchoring means comprise a second intermediate reinforced strip (18B).

5. The device according to claim 4, **characterised in that** said reinforced central strip (23A, 23B) and said first and second intermediate reinforced strips (18A, 18B) define an area of the nets (A, B) in which said nets (A, B) are tensioned and substantially planar, and further **characterised in that** said first and second intermediate reinforced strips (18A, 18B) together with, respectively, said first and second lateral woven edges (23, 23', 23 ") define a first and a second skirt portion (1A, 1B) of said nets (A, B).

6. The device according to claim 5, **characterised in that** said elastic cable (4) is positioned above said skirt portions (1A, 1B).

7. The device according to claim 6, **characterised in that** the skirt portions (1A, 1B) of two adjacent nets (A, B) define a substantially V-shaped bag, the lower edge of said V-shaped bag being formed by said first and second lateral woven edges (23) joined together at intervals by closing means (2).

8. The device according to claim 6, **characterised in that** the first and second lateral woven edges (23) of two adjacent nets (A, B) are joined together at intervals by closing means (2) fixed at an intermediate point of said elastic cable (4).

9. The device according to claim 5, **characterised in that** said elastic cable (4) is positioned below said skirt portions (1A, 1B), the first and second lateral woven edges (23) of two adjacent nets (A, B) being joined together at intervals by closing means (2).

10. The device according to claim 9, **characterised in that** said closing means (2) are fixed at an intermediate point of said elastic cable (4).

## Patentansprüche

1. Vorrichtung zum Schutz gegen Hagelkörner und ähnliche Wettererscheinungen, aufweisend: eine Trägerstruktur, ein erstes und ein zweites Netz (A, B), die einander benachbart sind, Spannmittel für diese Netze (A, B), **dadurch gekennzeichnet, dass**:
die Netze (A, B) einen verstärkten Mittelstreifen (23A, 23B) zur Verbindung mit der Trägerstruktur, erste und zweite seitliche Webränder (23, 23',23''), erste und zweite Zwischenverankerungsmittel, die zwischen dem verstärkten Mittelstreifen (23A, 23B) und den ersten und zweiten seitlichen Webrändern (23, 23', 23") angeordnet sind, aufweisen, und ferner **dadurch gekennzeichnet, dass**:
das Spannmittel elastische Träger- und Spannmittel (4) aufweist, welche das erste Zwischenverankerungsmittel des ersten Netzes (A) mit dem zweiten Zwischenverankerungsmittel des zweiten Netzes (B) verbinden.

2. Vorrichtung nach Anspruch 1, **dadurch gekennzeichnet, dass** die elastischen Träger- und Spannmittel (4) ein elastisches Seil umfassen.

3. Vorrichtung nach Anspruch 1 oder 2, **dadurch gekennzeichnet, dass** die Trägerstruktur Trägersäulen (7) und ein Firstseil (6) umfasst.

4. Vorrichtung nach einem oder mehreren der vorangehenden Ansprüche, **dadurch gekennzeichnet, dass** das erste Zwischenverankerungsmittel einen ersten verstärkten Zwischenstreifen (18A) umfasst und das zweite Zwischenverankerungsmittel einen zweiten verstärkten Zwischenstreifen (18B) umfasst.

5. Vorrichtung nach Anspruch 4, **dadurch gekennzeichnet, dass** der verstärkte Mittelstreifen (23A, 23B) und die ersten und zweiten verstärkten Zwischenstreifen (18A, 18B) einen Bereich der Netze (A, B) definieren, in denen die Netze (A, B) gespannt und im Wesentlichen plan sind, und ferner **dadurch gekennzeichnet, dass** die ersten und zweiten verstärkten Zwischenstreifen (18A, 18B) zusammen mit den ersten bzw. zweiten seitlichen Webrändern (23 , 23 ' , 23 ") einen ersten und einen zweiten Schürzenabschnitt (1A, 1B) der Netze (A, B) definieren.

6. Vorrichtung nach Anspruch 5, **dadurch gekennzeichnet, dass** das elastische Seil (4) über den Schürzenabschnitten (1A, 1B) angeordnet ist.

7. Vorrichtung nach Anspruch 6, **dadurch gekennzeichnet, dass** die Schürzenabschnitte (1A, 1B) von zwei benachbarten Netzen (A, B) einen im Wesentlichen V-förmigen Sack bilden, wobei der untere Rand des V-förmigen Sacks von den ersten und zweiten seitlichen Webrändern (23) gebildet wird, die anhand von Verschlussmitteln (2) in Intervallen aneinandergefügt sind.

8. Vorrichtung nach Anspruch 6, **dadurch gekennzeichnet, dass** die ersten und zweiten seitlichen Webränder (23) zweiter benachbarter Netze (A, B) in Intervallen durch Verschlussmittel (2) aneinandergefügt sind, die an einem Zwischenpunkt des elastischen Seils (4) fixiert sind.

9. Vorrichtung nach Anspruch 5, **dadurch gekennzeichnet, dass** das elastische Seil (4) zwischen den Schürzenabschnitten (1A, 1B) angeordnet ist, wobei die ersten und zweiten seitlichen Webränder (23) zweier benachbarter Netze (A, B) durch Verschlussmittel (2) in Intervallen aneinandergefügt sind,.

10. Vorrichtung nach Anspruch 9, **dadurch gekennzeichnet, dass** die Verschlussmittel (2) an einem Zwischenpunkt des elastischen Seils (4) befestigt sind.

## Revendications

1. Dispositif de protection contre la grêle et autres agents atmosphériques similaires comprenant :
une structure de support, des premier et second filets contigus (A, B), un moyen de tension pour lesdits filets (A, B), **caractérisé en ce que**:
lesdits filets (A, B) sont dotés d'une bande centrale renforcée (23A, 23B) pour un raccordement à ladite structure de support, des premier et second bords tissés latéraux (23, 23', 23"), des premier et second moyens d'ancrage intermédiaires positionnés entre ladite bande centrale renforcée (23A, 23B) et lesdits premier et second bords tissés latéraux (23, 23', 23 "), et **caractérisé en outre en ce que** :
ledit moyen de tension comprend un moyen élastique de support et de tension (4) qui raccorde le premier moyen d'ancrage intermédiaire du premier filet (A) au second moyen d'ancrage intermédiaire du second filet (B).

2. Dispositif selon la revendication 1, **caractérisé en ce que** ledit moyen élastique de support et de tension (4) comprend un câble élastique.

3. Dispositif selon la revendication 1 ou 2, **caractérisé en ce que** ladite structure de support comprend des perches de support (7) et un câble de faîtière (6).

4. Dispositif selon l'une quelconque des revendications précédentes, **caractérisé en ce que** ledit premier moyen d'ancrage intermédiaire comprend une première bande renforcée intermédiaire (18A) et ledit second moyen d'ancrage intermédiaire comprend une seconde bande renforcée intermédiaire (18B).

5. Dispositif selon la revendication 4, **caractérisé en ce que** ladite bande centrale renforcée (23A, 23B) desdites première et seconde bandes renforcées intermédiaires (18A, 18B) définit une zone des filets (A, B) dans laquelle lesdits filets (A, B) sont tendus et sensiblement planaires, et **caractérisé en outre en ce que** lesdites première et seconde bandes renforcées intermédiaires (18A, 18B) avec, respectivement, lesdits premier et second bords tissés latéraux (23, 23', 23 ") définissent une première et une seconde partie de jupe (1A, 1B) desdits filets (A, B).

6. Dispositif selon la revendication 5, **caractérisé en ce que** ledit câble élastique (4) est placé sur lesdites parties de jupe (1A, 1B).

7. Dispositif selon la revendication 6, **caractérisé en ce que** les parties de jupe (1A, 1B) de deux filets adjacents (A, B) définissent un sac sensiblement en forme de V, le bord inférieur dudit sac en forme de V étant formé par lesdits premier et second bords tissés latéraux (23) reliés ensemble à des intervalles par un moyen de fermeture (2).

8. Dispositif selon la revendication 6, **caractérisé en ce que** les premier et second bords tissés latéraux (23) de deux filets adjacents (A, B) sont reliés à des intervalles par un moyen de fermeture (2) fixé au niveau d'un point intermédiaire dudit câble élastique (4).

9. Dispositif selon la revendication 5, **caractérisé en ce que** ledit câble élastique (4) est placé sous lesdites parties de jupe (1A, 1B), les premier et second bords tissés latéraux (23) de deux filets adjacents (A, B) étant reliés à des intervalles par un moyen de fermeture (2).

10. Dispositif selon la revendication 9, **caractérisé en ce que** ledit moyen de fermeture (2) est fixé au niveau d'un point intermédiaire dudit câble élastique (4).
